# EUROPÄISCHE PATENTANMELDUNG

(11) **EP 0 536 703 A1**
(43) Veröffentlichungstag der Anmeldung: **14.04.1993**
(21) Anmeldenummer: 92117053.6
(22) Anmeldetag: 06.10.1992
(51) Int. Cl.: B65G 47/68

(54) **Anordnung zum Umformen eines angeförderten mehrspurigen Behälterstromes in einen abzufördernden einspurigen Behälterstrom**

(30) Priorität: 10.10.1991 DE 4133587; 22.02.1992 DE 4205476
(71) Anmelder: KHS Maschinen- und Anlagenbau Aktiengesellschaft, D-47057 Duisburg (DE)
(72) Erfinder: Elsner, Paul, W-6550 Bad Kreuznach (DE)

(57) **Zusammenfassung**

Bei einer Anordnung zum Umformen eines angeförderten, mehrspurigen Behälterstromes in einen abzufördernden einspurigen Behälterstrom ist zwischen einem Zuförderer (2,2b) für den mehrspurigen Behälterstrom und einem Abförderer (4,4b) für den einspurigen Behälterstrom ein Zwischenförderer (3,3a,3b) vorgesehen, der aus einer Vielzahl mit abgestuften Geschwindigkeiten (Geschwindigkeitsabstufungen) angetriebenen Förderbändern (7) besteht. Zum Umformen des mehrspurigen Behälterstromes bildet der Zwischenförderer (3,3a,3b) eine Gasse, die sich in Transportrichtung (A) symmetrisch zu einer Mittelachse (M) des Zwischenförderers (3,3a,3b) trichterartig bis auf eine den abzufördernden einspurigen Behälterstrom entsprechende Förderbreite verengt. An einem Ausgangsbereich des Zwischenförderers (3,3a,3b) schließt sich der zumindest an diesem Ausgangsbereich symmetrisch zur Mittelachse (M) ausgebildete Abförderer (4,4b) mit einer dem einspurigen Behälterstrom entsprechenden Förderbreite an. In Transportrichtung (A) weist der Zwischenförderer (3,3a,3b) mehr als zwei Geschwindigkeitsabstufungen auf.

## Beschreibung

Die Erfindung bezieht sich auf eine Anordnung gemäß Oberbegriff Patentanspruch 1.

Eine Anordnung dieser Art ist bekannt (EP-A-O 252 461). Bei der bekannten Anordnung wird auf dem Zwischenförderer sowie auf dem Abförderer ein angeförderter mehrspuriger Flaschenstrom in zwei Stufen in den abzufördernden einspurigen Flaschenstrom umgewandelt, und zwar derart, daß am Ausgangsbereich des Zwischenförderers noch ein zweispuriger Flaschenstrom vorliegt, der dann auf dem Abförderer endgültig in den einspurigen Flaschenstrom umgeformt wird. Der Zwischenförderer bildet in seinem Umformbereich eine von Führungen, d.h. von dortigen Führungsgeländern seitlich begrenzte Gasse, deren Spur- bzw. Förderbreite in Transportrichtung trichterartig und symmetrisch zu einer in Transportrichtung verlaufenden horizontalen Mittelachse abnimmt. Weiterhin ist der Zwischenförderer in seinem Umformbereich als Beschleunigungsstrecke für die Flaschen ausgebildet, d.h. er besteht dort aus mehreren Transportbändern, die teilweise auch schmale Transportbänder sind und Gruppen bzw. Förderabschnitte mit in Transportrichtung aneinander anschließenden Transportbändern bilden. Die Transportbänder sind dabei abgestuft mit unterschiedlicher Geschwindigkeit derart antreibbar, daß sich eine in Transportrichtung zunehmende Fördergeschwindigkeit ergibt.

Aufgabe der Erfindung ist es, eine Anordnung aufzuzeigen, die ein druckarmes Fördern der Behälter ermöglicht oder, als Alternative zum Stand der Technik, in nur einer Stufe ein druckarmes Umformen eines angeförderten mehrspurigen Behälterstromes in einen abzufördernden einspurigen Behälterstrom bei hoher Leistung gestattet.

Zur Lösung dieser Aufgabe ist eine Anordnung entsprechend dem kennzeichnenden Teil des Patentanspruches 1 ausgebildet.

Bei der Erfindung bildet der Zwischenförderer an dem ausschließlich am Zwischenförderer gebildeten Umformbereich eine Gasse, die sich bis zu dem Ausgangsbereich des Zwischenförderers bzw. bis der dem einspurigen Behälterstrom entsprechende Förder- bzw. Spurbreite symmetrisch zu der Mittelachse verengt, wobei gleichzeitig auch der Abförderer zumindest an diesem Ausgangsbereich mit seiner Achse achsgleich mit der Mittelachse liegt. Der gesamte Umformbereich des Zwischenförderers, dessen Anschluß bzw. Übergang zum Abförderer sowie auch die unmittelbar an den Zwischenförderer anschließend vorgesehene Gasse des Abförderers mit der dem einspurigen Behälterstrom entsprechenden Spur- bzw. Förderbreite sind somit hinsichtlich ihrer Formgebung und Anordnung sowie Gruppierung der zweiten Förderbänder bzw. der von diesen gebildeten Förderabschnitte und deren Geschwindigkeitsabstufungen symmetrisch zur Mittelachse M ausgeführt. Am Umformbereich werden somit eine optimale Beschleunigung bzw. Auflockerung und Zusammenführung der Behälter des mehrspurigen Behälterstromes in den einspurigen Behälterstrom erreicht.

Bei einer Ausführung, bei der die erfindungsgemäße Anordnung Teil einer Förderstrecke ist, wie sie in Behälter- bzw. Flaschenbehandlungslinien zum Verbinden der dort vorgesehenen Maschinen (Auspacker, Wasch- und Reinigungsmaschine, Füllmaschine, Verschließmaschine, Etikettiermaschine und/oder Einpacker usw.) üblicherweise verwendet ist, besteht die gesamte Förderstrecke ausschließlich aus schmalen Transportbändern.

"Schmale Transportbänder" im Sinne der Erfindung sind Transportbänder, deren Breite kleiner ist als der Durchmesser, den die zu verarbeitenden Behälter bzw. Flaschen an ihrem Boden aufweisen, und zwar derart, daß jeder Behälter jeweils auf wenigstens zwei quer zur Transportrichtung einander benachbarten Transportbändern aufsteht. Die Behälter besitzen beispielsweise einen Bodendurchmesser größer als 40 mm. Die Breite der "schmalen" Transportbänder beträgt beispielsweise 32 mm.

Dadurch, daß schmale Transportbänder verwendet und vorhandene Übergänge jeweils kammartig versetzt vorgesehen sind, ist sichergestellt, daß jeder Behälter auch an einem solchen Übergang teilweise auf dem diesen Übergang überbrückenden Transportband aufsteht, also ein druckloses Fördern der Behälter auch im Bereich der Übergänge erreicht ist. Hierdurch ist es möglich, auch Flaschen zuverlässig zu transportieren, die eine geringe Standfestigkeit aufweisen, wie dies beispielsweise bei Kunststoffflaschen oder PET-Flaschen der Fall ist. Weiterhin wird auch erreicht, daß die Förderstrecke vollständig leergefahren werden kann. Hierbei ist es dann nicht notwendig, Behälter manuell oder auf andere Weise über vorhandene Übergänge zu schieben, wie dies beispielsweise bei nicht kammartig versetzten Übergängen mit einem über die gesamte Förderbreite reichenden Überschubblech erforderlich wäre.

Durch die kammartig versetzten Übergänge wird weiterhin erreicht, daß die Behälter diese Übergänge im wesentlichen ohne Richtungsänderung passieren. Insbesondere lassen sich bei einem druckarmen Fördern der Behälter auch in Transportrichtung aufeinander folgende Förderabschnitte mit unterschiedlichen Geschwindigkeiten erreichen, d.h. es kann beispielsweise die Fördergeschwindigkeit der Behälter stufenweise erhöht werden. Im Bereich einer Einteil-Schnecke im Zulauf einer Behandlungsmaschine läßt sich auf diese Weise eine druckarme Förderung durch die Schnecke erzielen.

Seitliche Führungen des Zwischenförderers sind bei der erfindungsgemäßen Anordnung beispielsweise entweder von Führungsgeländern oder aber von wenigstens einer innenliegenden Länge eines endlosen Elementes gebildet, welches umlaufend derart angetrieben ist, daß sich diese Länge in Transportrichtung bewegt. Bevorzugt sind die Führungen senkrecht zur Mittelachse in einer horizontalen Achsrichtung verstellbar.

Weiterbildungen der Erfindung sind Gegenstand der Unteransprüche.

Die Erfindung wird im folgenden anhand der Figuren an Ausführungsbeispielen näher erläutert. Es zeigen:
- Fig. 1: in vereinfachter schematischer Darstellung und in Draufsicht eine erste Ausführungsform der erfindungsgemäßen Anordnung zum Umformen eines angeförderten mehrspurigen Flaschenstromes in einen abzufördernden einspurigen Flaschenstrom;
- Fig. 2: in ähnlicher Darstellung wie Fig. 1 eine weitere mögliche Ausführungsform;
- Fig. 3: in vereinfachter schematischer Darstellung und in Draufsicht einen Teil einer Förderstrecke, und zwar zusammen mit einer weiteren möglichen Ausführungsform der erfindungsgemäßen Anordnung.

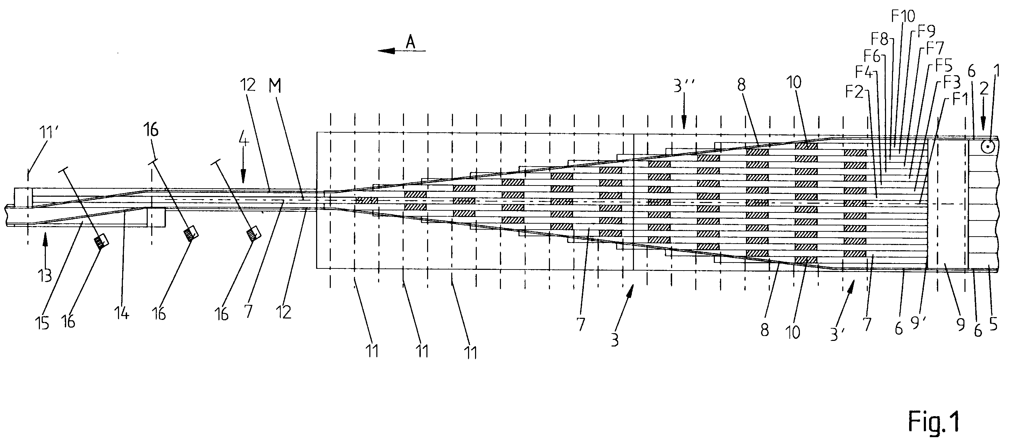

Die in der Fig. 1 dargestellte Anordnung zum Umformen des angeförderten, aus einer Vielzahl von Flaschen 1 bestehenden mehrspurigen, d.h. bei der dargestellten Ausführungsform achtspurigen Flaschenstroms in den abzufördernden einspurigen Flaschenstrom besteht im wesentlichen aus einem Zuförderer 2, aus einem Zwischenförderer 3 und aus einem Abförderer 4. Der Zuförderer 2, der zum Zuführen des mehrspurigen Flaschenstromes dient und bei der dargestellten Ausführungsform gleichzeitig auch die Funktion eines Dosierbandes bzw. -förderers hat, ist im wesentlichen von mehreren, in sich geschlossenen und von einem nicht näher dargestellten regelbaren Antrieb endlos umlaufend angetriebenen Transportbändern 5 sowie von zwei die Spur- bzw. Förderbreite des Zuförderers 2 begrenzenden Führungsgeländern 6 gebildet. Bei der dargestellten Ausführungsform sind senkrecht zur Transportrichtung A des Zuförderers 2, die auch die Transportrichtung des Zwischenförderers 3 und des Abförderers 4 ist, insgesamt acht Transportbänder 5 seitlich aneinander anschließend vorgesehen.

Der Zwischenförderer 3, der den Umformbereich zum Umformen des mehrspurigen Flaschenstromes in den einspurigen Flaschenstrom bildet, besteht im wesentlichen aus einer Vielzahl von durch nicht dargestellte Antriebe endlos umlaufend angetriebenen Transportbändern 7, die teilweise in Transportrichtung A aneinander anschließend, teilweise auch senkrecht zur Transportrichtung A nebeneinander vorgesehen sind, sowie aus zwei seitlichen Führungsgeländern 8, von denen jedes in Transportrichtung A an ein Führungsgeländer 6 anschließt und die in einem den Eingangsbereich des Zwischenförderers 3 bildenden Teilbereich 3' zunächst parallel zueinander sowie auch parallel zu einer in Transportrichtung A verlaufenden horizontalen Mittelachse M angeordnet sind. Anschließend erstrecken sich die Führungsgeländer 8 in einem Teilbereich 3'' weiterhin symmetrisch zu der Mittelachse M, aber schräg zur Mittelachse M bzw. zur Transportrichtung A, und zwar derart, daß die Breite der zwischen den beiden Führungsgeländern 8 gebildeten Gasse für die Flaschen 1 ständig abnimmt. Hierdurch wird ein keilförmiger, schlanker Umformbereich erhalten, in dem schließlich die Spur- bzw. Förderbreite des Zwischenförderers 3 an seinem dem Zuförderer 2 abgewandten Ausgangsbereich dem einspurigen Flaschenstrom entspricht.

Mit seinem dem Zuförderer 2 zugewandten Eingangsbereich schließt sich der Zwischenförderer 3 über einen von wenigstens einem Gleitblech gebildeten Übergang 9 spurgleich an den Zuförderer 2 an.

Die schmalen Transportbänder 7, die Bänder mit einer im Vergleich zu den Transportbändern 5 geringeren Breite sind, bilden mehrere Förderabschnitte, und zwar
einen mittleren Förderabschnitt F1, der mit seiner Längserstreckung achsgleich mit der Mittelachse M vorgesehen und von mehreren, sich in Richtung der Mittelachse M bzw. in Transportrichtung A aneinander anschließenden Transportbändern 7 gebildet ist, sowie
seitliche Förderabschnitte F2-F10, die jeweils paarweise und symmetrisch zur Mittelachse M vorgesehen sind und sich senkrecht zur Transportrichtung A an den mittleren Förderabschnitt F1 bzw. aneinander anschließen.

Demnach sind beidseitig von dem mittleren Förderabschnitt F1 jeweils ein Förderabschnitt F2, seitlich von jedem Förderabschnitt F2 jeweils ein Förderabschnitt F3 usw. vorgesehen. Mit Ausnahme der beiden äußeren Förderabschnitte F10 bestehen sämtliche Förderabschnitte F1-F9 bei der dargestellten Ausführungsform aus mehreren, in Transportrichtung A aneinander anschließenden Transportbändern 7. Entsprechend der sich in Transportrichtung A keilförmig verengenden Spur- bzw. Förderbreite des Teilbereichs 3'' ist bei der dargestellten Ausführungsform die Anzahl der einen Förderabschnitt F1-F9 bildenden und in Transportrichtung A aneinander anschließenden Transportbänder 7 am mittleren Förderabschnitt F1 am größten und nimmt ausgehend von diesem mittleren Förderabschnitt F1 zu den weiter außen liegenden Förderabschnitten F2-F9 ab. Dort, wo die Transportbänder 7 der Förderabschnitte F1-F9 aneinander anschließen, sind jeweils von Blechen gebildete Übergänge 10 vorgesehen. Diese Übergänge 10 bzw. die Umlenkungen der Transportbänder 7 sind an den einander benachbarten Förderabschnitt F1-F10 jeweils in Transportrichtung A kammartig versetzt, d.h. jeder Übergang 10 bzw. jede Umlenkung eines Transportbandes 7 eines Förderabschnittes ist senkrecht zur Transportrichtung A dem Obertrum eines Transportbandes 7 eines benachbarten Förderabschnittes benachbart und wird von diesem benachbarten Transportband 7 überbrückt. Entsprechend der der Keilform des Teilbereichs 3'' reicht nur der mittlere Förderabschnitt F1 bis an den dem Abförderer 4 zugewandten Ausgangsbereich des Zwischenförderers 3, während die übrigen Förderabschnitte F2-F10 jeweils mit Abstand vor diesem Ausgangsbereich enden und dieser Abstand zu den äußeren Förderabschnitten F10 hin größer wird, so daß am Ausgangsbereich nur der Förderabschnitt F1 und zwei Förderabschnitte F2 vorliegen, während am Übergang 9 bzw. an der dortigen Überschubkante 9' sämtliche Förderabschnitte F1-F10 vorhanden sind.

An ihrem in Transportrichtung A vorderen Ende sind die Transportbänder 7 jeweils angetrieben. Die entsprechenden Achsen sind in der Fig. 1 mit 11 bezeichnet.

Das den Ausgangsbereich des Zwischenförderers 3 bildende letzte Transportband 7 des mittleren Förderabschnittes F1 ist bei der dargestellten Ausführungsform zugleich auch das Transportband des Abförderers 4 und ist an seinem in Transportrichtung A vorderen Ende durch einen gesteuerten Antrieb angetrieben. Die entsprechende Achse ist mit 11' bezeichnet.

Um eine drucklose Zusammenführung des mehrspurigen Flaschenstroms in den einspurigen Flaschenstrom zu erreichen, ist der Zwischenförderer 3 als mehrstufige Beschleunigungsstrecke betrieben, d.h. die Antriebe für die einzelnen Transportbänder 7 sind so ausgeführt, daß in jedem Förderabschnitt F1 - F9 jedes in Transportrichtung A an ein Transportband 7 anschließende Transportband 7 eine höhere Fördergeschwindigkeit aufweist als das in Transportrichtung A vorausgehende Transportband 7.

Die Transportbänder 5 und auch die Transportbänder 7 bilden mit ihren oberen Längen bzw. ihren Obertrumen jeweils eine horizontale Stand- bzw. Transportfläche für die Flaschen 1.

Bei der dargestellten Ausführungsform sind die Führungsgeländer 8 in den beiden Teilbereichen 3' und 3'' des Zwischenförderers 3 jeweils geradlinig ausgeführt und schließen im Teilbereich 3'' mit der Mittelachse M einen Winkel von etwa 15 bis 20^{o} ein, so daß sich dort der relativ schlanker keilförmiger Umformbereich ergibt.

Der Zwischenförderer 3 ist hinsichtlich der Anordnung und Gruppierung der Transportbänder 7 sowie der von diesen gebildeten Förderabschnitte sowie auch hinsichtlich der abgestuften, unterschiedlichen Fördergeschwindigkeit der Transportbänder 7 völlig symmetrisch zur Mittelachse M ausgeführt. Es versteht sich, daß die Fördergeschwindigkeit des Abförderers 4 größer ist als die Fördergeschwindigkeit des Zuförderers 3, und zwar um einen Faktor, der der Anzahl der Spuren des mehrspurigen Flaschenstromes entspricht.

Der Abförderer 4, der symmetrisch zur Mittelachse M angeordnet ist und bereits am Ausgangsbereich des Zwischenförderers 3 eine Gasse für die Flaschen 1 mit einer dem einspurigen Flaschenstrom entsprechenden Spur- oder Förderbreite bildet, wird im wesentlichen von dem bereits erwähnten Transportband 7, welches mit seiner Längserstreckung achsgleich mit der Mittelachse M liegt, sowie von zwei Führungsgeländern 12 gebildet, von denen jedes an ein Führungsgeländer 8 anschließt und die parallel zueinander sowie parallel zur Mittelachse und von dieser auch jeweils gleich beabstandet vorgesehen sind. Der Abstand der beiden Führungsgeländer 12 entspricht selbstverständlich der Spur-bzw. Förderbreite des einspurigen Flaschenstromes. An dem dem Zwischenförderer 3 entfernt liegenden Auslauf des Abförderers 4 schließt an diesen seitlich ein Transporteur 13 an, der von Führungsgeländern 14 und einem den Transportbändern 5 entsprechenden Transportband 15 gebildet ist und auf den die Flaschen 1 des einspurigen Flaschenstroms durch entsprechende Ausbildung der Führungsgeländer 14 seitlich übergeschoben werden.

Am Abförderer 4 sind Sensoren 16 vorgesehen, die mit einer nicht dargestellten Steuereinrichtung zusammenwirken. Die Sensoren 16 dienen zur Erkennung von Lücken in dem abzufördernden Flaschenstrom und zur Steuerung der Antriebe für das den Abförderer 4 bildende Transportband 7, für den Zwischenförderer 3 und den Zuförderer 2 in Abhängigkeit von der Staulage auf dem Abförderer 4. Der als Dosierförderer bzw. Dosierband ausgebildete Zuförderer 2, der in Transportrichtung A einem als Puffer ausgebildeten Transporteur oder Abschnitt eines Transporteurs folgt, ist in Abhängigkeit von der Leistung einer vorgeschalteten Maschine so gesteuert, daß er die je Zeiteinheit an den Zwischenförderer 3 abgegebene Anzahl an Flaschen optimal dosiert, und zwar derart, daß sich auch bei einer hohen Leistung der Anordnung (Anzahl der je Zeiteinheit durchlaufenden Flaschen) nach einer drucklosen Zusammenführung der angestrebte einspurige Flaschenstrom ergibt, in dem die Flaschen 1 ohne Lücken aufeinanderfolgen.

Ein von einem Überschubblech gebildeter Übergang ist am Anschluß des Abförderers 4 an den Zwischenförderer 3 oder im Bereich des Abförderers 4 nicht erforderlich.

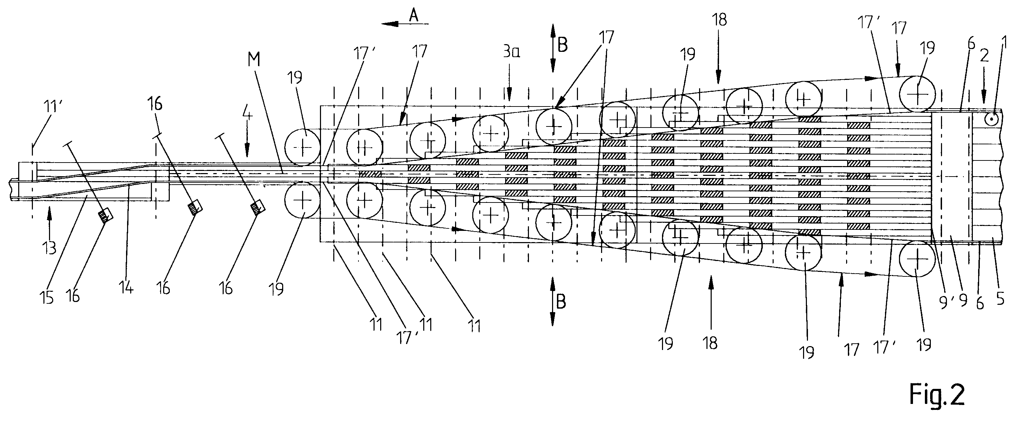

Die Fig. 2 zeigt eine Anordnung zum Umformen eines angeförderten, mehrspurigen Flaschenstroms in einen abzufördernden einspurigen Flaschenstrom, die (Anordnung) sich von der Anordnung der Fig. 1 im wesentlichen nur dadurch unterscheidet, daß der dortige Zwischenförderer 3a anstelle der Führungsgeländer 8 von mehreren, in sich geschlossenen Riemen 17 gebildete Führungen 18 aufweist. Bei der dargestellten Ausführungsform ist jeder Riemen 17 über zwei Riemenscheiben 19 geführt, welche am Maschinengestell der Anordnung jeweils um eine vertikale Achse drehbar derart gelagert sind, daß jeder über die Riemenscheiben 19 geführte Riemen 17 mit einer sich in horizontaler Richtung erstreckenden und der Mittelachse M näherliegenden inneren Länge 17' einen Teil der betreffenden Führung 18 bzw. einen Führungsabschnitt für die Flaschen 1 am Zwischenförderer 3a bildet. Wie die Fig. 2 zeigt, sind bei jeder Führung 18 mit Ausnahme der am Einlauf und am Auslauf des Zwischenförderers 3a vorgesehenen Riemenscheiben 17 diese jeweils paarweise, achsgleich zueinander und in vertikaler Richtung gegeneinander versetzt derart vorgesehen, daß die von den Längen 17' gebildeten Führungsabschnitte jeder Führung 18 in Transportrichtung A überlappend aneinander anschließen.

Die Riemen 17 sind selbstverständlich so angetrieben, daß sich die inneren Längen 17' in Transportrichtung A bewegen, wobei speziell bei der dargestellten Ausführungsform ein abgestufter Antrieb für die einzelnen Riemen 17 derart vorgesehen ist, daß jeder in Transportrichtung A auf einen Riemen 17 folgender Riemen 17 einer Führung 18 eine höhere Geschwindigkeit aufweist als der vorausgehende Riemen 17. Die Geschwindigkeit der einzelnen Riemen 17 ist weiterhin so eingestellt, daß diese Geschwindigkeit gleich oder in etwa gleich der Fördergeschwindigkeit desjenigen Transportbandes 7 ist, dem die Länge 17' des betreffenden Riemens 17 benachbart ist.

Durch die von den umlaufenden Riemen 17 gebildeten Führungen 18 wird insbesondere auch unter Vermeidung eines Reibens der Flaschen 1 an Führungsgeländern eine noch weitergehende Verbesserung der drucklosen Zusammenführung bei hohen Leistungen erreicht.

Wie die Führungsgeländer 8 sind auch die Führungen 18 und insbesondere die von den Längen 17' gebildeten Führungsabschnitte symmetrisch zur Mittelachse M verlaufend vorgesehen, so daß sich auf dem Zwischenförderer 3a ein symmetrisch zu dieser Mittelachse M ausgebildeter keilförmiger Umformbereich ergibt, der bei der Ausführung nach Fig. 2 allerdings bereits am Übergang 9 beginnt.

Es versteht sich, daß zusätzlich zu den Führungen 18 auch beim Zwischenförderer 3a noch seitliche Führungsgeländer vorgesehen sein können, die allerdings nur bei Störungen wirksam werden, beispielsweise umgefallene Flaschen 1 zurückhalten usw.

Zur Anpassung der Anordnung an Flaschen 1 mit unterschiedlichem Durchmesser und/oder zur Optimierung der Form des Umformbereichs sind die Führungen 18 des Zwischenförderers 3a, aber auch die Führungsgeländer 8 des Zwischenförderers 3 horizontal und senkrecht zur Transportrichtung A verstellbar, wie dies in der Fig. 2 durch den Doppelpfeil B angedeutet ist.

Die Transportbänder 5 des Zuförderers 2 können ebenfalls schmale Transportbänder sein, die am Zuförderer 2 wieder senkrecht zur Transportrichtung A aneinander anschließen und deren Breite gleich der Breite der Transportbänder 7 ist. In diesem Fall sind bevorzugt anstelle des Überganges 9 mehrere den Übergängen 10 entsprechende Übergänge vorgesehen, die dann kammartig derart versetzt sind, daß einem jeden solchen Übergang senkrecht zur Transportrichtung A das Obertrum eines Transportbandes 5 oder 7 benachbart liegt.

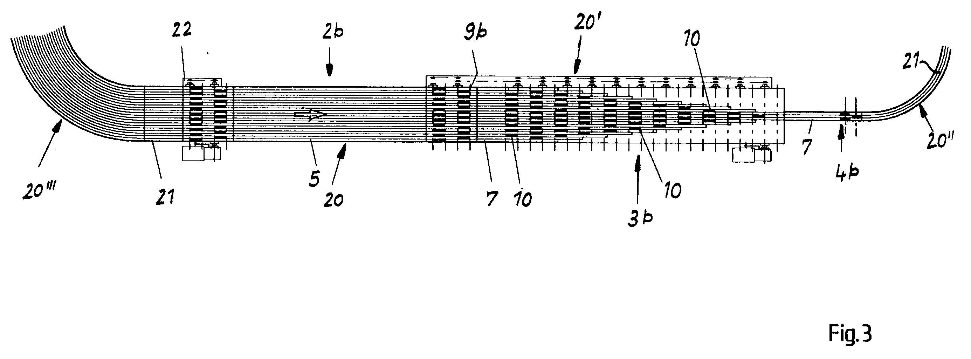

Fig. 3 zeigt als weitere, mögliche Ausführung eine in dieser Figur mit 20 bezeichnete Förderstrecke, die mit einem Abschnitt 20' eine Anordnung zum Umformen eines angeförderten mehrspurigen Behälter- bzw. Flaschenstromes in einen abzufördernden einspurigen Flaschenstrom bildet. Die Förderstrecke 20, die in der Fig. 3 nur teilweise dargestellt ist, verbindet in üblicher Weise verschiedene, in der Fig. 3 ebenfalls nicht dargestellte Behandlungsmaschinen, beispielsweise Flaschenreinigungsmaschine, Füllmaschine (gegebenenfalls in Kombination mit Verschließmschine), Etikettiermaschine, Einpacker usw.

Bei Förderstrecke 20 sind nicht nur im Abschnitt 20', d. h. im Bereich des Zuförderers 2b, des Zwischenförderers 3b und des Abförderers 4b der dortigen Anordnung zum Umformen des Flaschenstromes, ausschließlich die Transportbänder 7 sowie diesen entsprechende schmale Transportbänder 21 verwendet, sondern die gesamte Förderstrecke besteht auch in allen anderen Bereichen bzw. Abschnitten 20'' und 20''' ausschließlich aus den schmalen Transportbändern 21, deren Breite gleich der Breite der Tansportbänder 7 und quer zur Transportrichtung kleiner ist als der Bodendurchmesser, den die mit der Anlage zu verarbeitenden kleinsten Flaschen 1 (Flaschen 1 mit dem kleinsten Bodendurchmesser) aufweisen. Sämtliche Ubergänge 9b, 10 und 22 zwischen in Transportrichtung A aneinander anschließenden Transportbändern 21 auch außerhalb des Zwischenförderers 3b sind jeweils kammartig versetzt vorgesehen, wie dies vorstehend in Verbindung mit den Fig. 1 und 2 für die Übergänge 10 beschrieben wurde.

Bei der in der Fig. 3 dargestellten Ausführungsform besteht der Abförderer 4b aus drei in Transportrichtung A nebeneinander angeordneten Transportbändern 7, von denen die beiden äußeren mit ihren in Transportrichtung A vorderen Enden bis in den Zwischenförderer 3b hineinreichen und das mittlere Transportband 7 mit seinem in Transportrichtung A vorderen Ende etwa am Übergang zwischen dem Zwischenförderer 3b und dem Abförderer 4b beginnt.

Ein Vorteil der in der Fig. 3 dargestellten Förderstrecke besteht u.a. darin, daß jede Flasche 1 auf der gesamten Förderstrecke stets auf wenigstens zwei Transportbändern 7 bzw. 21 und an jedem Übergang 9b, 10 bzw. 22 wenigstens auf einem Transportband 7 bzw. 21 aufsteht, so daß sich die Flaschen 1 weitestgehend drucklos über die Übergänge 9b, 10 bzw. 22 bewegen, es insbesondere nicht notwendig ist, daß die Flaschen 1 zum Passieren der Übergänge 9b, 10 bzw. 22 jeweils durch nachfolgende Flaschen weitergeschoben werden. Hierdurch ist es möglich, mit der Förderstrecke auch Flaschen 1 zuverlässig und sicher zu transportieren, die nur ein geringes Standvermögen aufweisen, wie dies beispielsweise bei Kunststoff- oder PET-Flaschen der Fall ist.

Ein weiterer Vorteil besteht auch darin, daß an den Übergängen 9b, 10 bzw. 22 keine Flaschen stehen bleiben, wenn in Förderrichtung nachfolgende Flaschen 1 fehlen. Ohne manuelle Eingriffe kann somit die Förderstrecke der Fig. 3 leergefahren werden.

Ein weiterer Vorteil besteht u.a. auch darin, daß der auf den Abförderer 4b folgende Abschnitt 20'' der Förderstrecke 20 an diesen Abförderer spur- bzw. richtungsgleich anschließen kann, die Flaschen 1 also unter Vermeidung von Parallel-Übergängen ohne Richtungsänderung vom Abförderer 4b auf den Abschnitt 20'' gelangen.

Die Transportbänder 7 bzw. 21 besitzen beispielsweise eine Breite von ca. 33 mm, so daß mit den vorgenannten Vorteilen Flaschen 1 verwendet werden können, deren Bodendurchmesser größer als 40 mm, bevorzugt größer als 45 mm ist.

Die Erfindung wurde voranstehend an Ausführungsbeispielen beschrieben. Es versteht sich, daß zahlreiche Änderungen sowie Abwandlungen möglich sind, ohne daß dadurch der der Erfindung zugrundeliegende Erfindungsgedanke verlassen wird. So ist selbstverständlich die Anordnung in ihrer Verwendung nicht auf das Umformen eines mehrspurigen Flaschenstromes in einen einspurigen Flaschenstrom beschränkt, sondern mit der Anordnung können ganz allgemein mehrspurige Behälterströme, die von Flaschen, Dosen oder dgl. Behältern gebildet sind, in einen einspurigen Behälterstrom umgeformt werden.

### Aufstellung der verwendeten Bezugsziffern

- 1: Flasche
- 2, 2b: Zuförderer
- 3, 3a, 3b: Zwischenförderer
- 3', 3'': Teilbereich
- 4, 4b: Abförderer
- 5: Transportband
- 6: Führungsgeländer
- 7: Transportband
- 8: Führungsgeländer
- 9, 9b: Übergang
- 10: Übergang
- 11, 11': Achse
- 12: Führungsgeländer
- 13: Transporteur
- 14: Führungsgeländer
- 15: Transportband
- 16: Sensor
- 17: Riemen
- 17': Länge
- 18: Führung
- 19: Riemenscheibe
- 20: Transportstrecke
- 20', 29'', 20''': Abschnitt
- 21: Transportband
- 22: Übergang
- F1 - F10: Förderabschnitt
- A: Transportrichtung
- B: Verstellrichtung
- M: Mittelachse

## Patentansprüche

1. Anordnung zum Umformen eines angeförderten, mehrspurigen Behälterstromes in einen abzufördernden einspurigen Behälterstrom, mit mehreren endlos umlaufenden und mit ihren oberen Längen Standflächen für die Behälter (1) bildenden Transportbändern (5, 7), von denen erste Transportbänder (5) einen seitliche Führungsgeländer (6) aufweisenden mehrspurigen Zuförderer (2, 2b) und hieran in einer Transportrichtung (A) anschließend zweite Transportbänder (7) einen Zwischenförderer (3, 3a, 3b) bilden, der an einem Umformbereich (3'') eine durch seitliche Führungen (8, 18) begrenzte und sich symmetrisch zu einer sich in Transportrichtung (A) erstreckenden Mittelachse (M) verengende Gasse für die Behälter (1) bildet und an dessen Ausgangsbereich sich in Transportrichtung (A) ein Abförderer (4, 4b) anschließt, welcher für die Behälter (1) auf wenigstens einem Transportband (7) und zwischen seitlichen Führungsgeländern (12) eine Gasse bildet, deren Förderbreite dem einspurigen abzufördernden Behälterstrom entspricht, wobei die zweiten Transportbänder (7) zumindest im Umformbereich (3'') symmetrisch zur Mittelachse (M) angeordnet sind und mehrere senkrecht zur Transportrichtung (A) aneinander anschließende und zur Mittelachse symmetrische Förderabschnitte (F1 - F9) mit in Transportrichtung (A) an ersten Übergängen (10) aneinander anschließenden zweiten Transportbändern (7) bilden, wobei die zweiten Transportbänder (7) abgestuft mit unterschiedlicher Geschwindigkeit, d.h. mit Geschwindigkeitsabstufungen derart angetrieben sind, daß bei zwei in Transportrichtung (A) aufeinanderfolgenden zweiten Transportbändern (7) eines Förderabschnittes (F1 - F9) das in Transportrichtung (A) folgende dem Abförderer (4, 4b) näherliegende zweite Transportband (7) eine höhere Geschwindigkeit als das in Transportrichtung (A) vorausgehende zweite Transportband (7) aufweist, dadurch gekennzeichnet, daß sich die Gasse des Zwischenförderers (3, 3a, 3b) bis auf die dem einspurigen Behälterstrom entsprechende Förderbreite symmetrisch zur Mittelachse (M) verengt, daß die dem einspurigen Behälterstrom entsprechende Gasse des Abförderers (4, 4b) symmetrisch zur Mittelachse (M) an den Ausgangsbereich des Zwischenförderers anschließt, und daß in Transportrichtung (A) mehr als zwei Geschwindigkeitsabstufungen vorgesehen sind.

2. Anordnung nach Anspruch 1, dadurch gekennzeichnet, daß die seitlichen Führungen des Zwischenförderers (3a) zumindest im Umformbereich von wenigstens einer der Mittelachse (M) zugewandten innenliegenden Länge (17') eines in sich geschlossenen Riemens, einer in sich geschlossenen Kette oder dergleichen endlosen Elementes (17) gebildet ist, welches umlaufend derart angetrieben ist, daß sich die innenliegende Länge (17') in Transportrichtung (A) bewegt, und zwar beispielsweise mit einer an die Fördegeschwindigkeit eines benachbarten zweiten Transportbandes (7) angepaßten Geschwindigkeit,
wobei vorzugsweise jede Führung (18) eine Vielzahl von endlosen Elementen (17) aufweist, die mit ihren innenliegenden Längen (17') in Transportrichtung (A) aneinander anschließen und vorzugsweise abgestuft mit unterschiedlicher Geschwindigkeit derart angetrieben sind, daß die Geschwindigkeit der innenliegenden, aneinander anschließenden Längen (17') in Transportrichtung (A) zunimmt und vorzugsweise bei jeder Führung (18) für jede Geschwindigkeitsabstufung ein endloses Element vorgesehen ist.

3. Anordnung nach Anspruch 1 oder 2, dadurch gekennzeichnet, daß der Zwischenförderer (3, 3b) in Transportrichtung (A) einen ersten, an den Zuförderer (2, 2b) anschließenden Teilbereich (3') mit im wesentlichen gleichbleibender Spur- und Förderbreite und daran anschließend einen zweiten Teilbereich (3'') aufweist, der die sich in Transportrichtung (A) verengende Gasse des Zwischenförderers (3, 3b) bildet.

4. Anordnung nach einem der Ansprüche 1 bis 3, dadurch gekennzeichnet, daß der Zwischenförderer (3a) im wesentlichen über seine gesamte Länge die sich in Transportrichtung (A) verengende Gasse des Zwischenförderers (3a) bildet, und/oder daß sich der Zwischenförderer (3, 3a, 3b) bzw. die von diesem gebildete Gasse nach Art eines schlanken Kegels verengt.

5. Anordnung nach einem der Ansprüche 1 bis 4, dadurch gekennzeichnet, daß die die Gasse des Zwischenförderers (3, 3a, 3b) begrenzenden Führungen (8, 18) im wesentlichen geradlinig verlaufend ausgeführt sind, wobei vorzugsweise die Führungen (8, 18) mit der Mittelachse (M) einen Winkel in der Größenordnung von etwa 15 bis 20^{o} einschließen.

6. Anordnung nach einem der Ansprüche 1 bis 5, dadurch gekennzeichnet, daß wenigstens ein Transportband (7) zumindest eines mittleren, der Mittelachse (M) unmittelbar benachbarten Förderabschnitts (F1) zugleich das Transportband (7) des Abförderers (4, 4b) bildet.

7. Anordnung nach einem der Ansprüche 1 bis 6, dadurch gekennzeichnet, daß die ersten Übergänge (10) und/oder Transportbandumlenkungen benachbarter Förderabschnitte (F1 -F10) kammartig, d.h. in Transportrichtung (A) derart versetzt sind, daß jedem ersten Übergang (10) oder jeder Transportbandumlenkung senkrecht zur Transportrichtung (A) das Obertrum eines zweiten Transportbandes (7) benachbart liegt bzw. von diesem benachbarten zweiten Transportband (7) überbrückt wird.

8. Anordnung nach einem der Ansprüche 1 bis 7, dadurch gekennzeichnet, daß der Zuförderer (2, 2b) als Dosierband ausgebildet ist,
und/oder daß am Abförderer (4) wenigstens ein Lücken im einspurigen Behälterstrom erkennender Sensor (16) vorgesehen ist,
und/oder daß der Sensor (16) ein die Fördergeschwindigkeit des Abförderers (4) regelndes Signal liefert.

9. Anordnung nach einem der Ansprüche 1 bis 8, dadurch gekennzeichnet, daß der Zwischenförderer (3, 3a) an den Zuförderer (2) an einem zweiten von wenigstens einem Gleitblech gebildeten Übergang (9) anschließt, der eine senkrecht zur Transportrichtung (A) verlaufende Überschubkante (9') bildet.

10. Anordnung nach einem der Ansprüche 1 bis 9, dadurch gekennzeichnet, daß die zweiten Transportbänder (7) eine Breite aufweisen, die kleiner ist als die Breite der ersten Transportbänder (5).

11. Anordnung nach einem der Ansprüche 1 bis 9, dadurch gekennzeichnet, daß die ersten Transportbänder (5) des Zuförderers (2, 2b) die gleiche Breite wie die zweiten Transportbänder (7) des Zwischenförderers (3, 3a, 3b) aufweisen, daß zwischen jedem ersten Transportband (5) und jedem in Transportrichtung (A) anschließenden zweiten Transportband ein zweiter Übergang (9b ) vorgesehen ist, und daß die zweiten Übergänge (9b) in Transportrichtung (A) kammartig derart versetzt sind, daß jedem Übergang senkrecht zur Transportrichtung (A) das Obertrum eines ersten oder zweiten Transportbandes (5, 7) benachbart liegt bzw. von diesem benachbarten ersten oder zweiten Transportband (5, 7) überbrückt wird, wobei vorzugsweise die ersten und zweiten Transportbänder (5, 7) schmale Transportbänder sind.

12. Anordnung nach einem der Ansprüche 1 bis 13, dadurch gekennzeichnet, daß der Abförderer (4b) von drei in einer Achsrichtung senkrecht zur Transportrichtung (A) aneinander anschließenden Transportbändern (7) gebildet ist, die jeweils die gleiche Breite wie die zweiten Transportbänder (7) des Zwischenförderers (3b) aufweisen und an ihren in Transportrichtung (A) vorderen Enden an jeweils ein in Transportrichtung (A) vorausgehendes zweites Transportband (7) des Zwischenförderers (3b) an ersten Übergängen (10) oder diesen entsprechenden Übergängen anschließen, die kammartig derart versetzt sind, daß jedem dieser Übergänge senkrecht zur Transportrichtung (A) das Obertrum eines zweiten Transportbandes (7) benachbart liegt bzw. von diesem benachbarten zweiten Transportband (7) überbrückt wird.

13. Anordnung nach einem der Ansprüche 1 bis 12, dadurch gekennzeichnet, daß die Breite der zweiten Transportbänder (7) kleiner ist als der Durchmesser, den die Behälter (1) an ihrem auf den Transportbändern (5, 7) aufstehenden Boden besitzen.

14. Anordnung nach einem der Ansprüche 1 bis 13, gekennzeichnet durch ihre Verwendung in einer mehrere Abschnitte aufweisenden Förderstrecke (20), die in sämtlichen Abschnitten jeweils von Transportbändern (7, 21) gebildet ist, die die gleiche Breite wie die zweiten Transportbänder (7) des Zwischenförderers (3b) besitzen, und daß bei in Transportrichtung (A) aneinander anschließenden Transportbändern (7, 21) die entsprechenden Übergänge (9b, 10, 22) jeweils kammartig derart versetzt sind, daß jeder Übergang (9b, 10, 22) jeweils von einem benachbarten Transportband (7, 21) überbrückt ist, wobei vorzugsweise Abschnitte (20'') mit der geringsten Förderbreite von wenigstens zwei Transportbändern (7, 21), vorzugsweise von drei Transportbändern gebildet sind.

15. Anordnung nach einem der Ansprüche 1 bis 13, gekennzeichnet durch ihre Verwendung als Teil einer zum Transportieren von Behältern, insbesondere Flaschen (1), dienenden Förderstrecke zur Verwendung bei Behälter-Behandlungs-Linien, die Auspacker und/oder Reinigungsmaschinen und/oder Füllmaschinen und/oder Verschließmaschinen und/oder Etikettiermaschinen und/oder Einpacker oder dergleichen Behälterbehandlungsmaschinen aufweisen, mit mehreren, die Förderstrecke (20) bildenden und in einer Transportrichtung (A) aneinander anschließenden Abschnitten (20', 20''), die endlos umlaufend antreibbare Transportbänder (7, 21) aufweisen, welche jeweils mit einem Obertrum Standflächen für den Boden der Behälter (1) bilden, wobei die Förderstrecke Übergänge (9b, 10, 22) aufweist, an denen jeweils in Transportrichtung (A) zwei Transportbänder (7, 21) aneinander anschließen, wobei sämtliche Transportbänder (7, 21) der Förderstrecke (20) eine Breite besitzen, die kleiner ist als der Durchmesser, den die Behälter (1) an ihrem Boden aufweisen, und wobei die Übergänge (9a, 10, 22) jeweils in Transportrichtung (A) kammartig derart versetzt sind, daß jedem Übergang (9b, 10, 22) das Obertrum eines in einer Achsrichtung senkrecht zur Transportrichtung (A) benachbarten Transportbandes (7, 21) benachbart liegt bzw. von diesem benachbarten Transportband (7, 21) überbrückt wird.
